# EUROPÄISCHE PATENTSCHRIFT

(11) **EP 2 436 100 B1**
(45) Veröffentlichungstag und Bekanntmachung des Hinweises auf die Patenterteilung: **03.04.2013**
(21) Anmeldenummer: 10720992.6
(22) Anmeldetag: 03.05.2010
(51) Int. Cl.: H02K 1/27

(54) **BLECHPAKET, INSBESONDERE FÜR DEN ROTOR EINES ELEKTROMOTORS**
LAMINATION STACK, IN PARTICULAR FOR THE ROTOR OF AN ELECTRIC MOTOR
PAQUET DE TÔLES, EN PARTICULIER POUR LE ROTOR D'UN MOTEUR ÉLECTRIQUE

(30) Priorität: 27.05.2009 DE 202009007544 U
(43) Veröffentlichungstag der Anmeldung: 04.04.2012
(73) Patentinhaber: Brose Fahrzeugteile GmbH & Co. Kommanditgesellschaft, Würzburg, 97076 Würzburg (DE)
(72) Erfinder: ZAPS, Klaus, 97332 Volkach/Astheim (DE); KURBEGOVIC-ZRNIC, Jasmin, 97078 Würzburg (DE)
(74) Vertreter: FDST Patentanwälte
(86) Internationale Anmeldenummer: PCT/EP2010/002675
(87) Internationale Veröffentlichungsnummer: WO 2010/136107

(56) Entgegenhaltungen:
- DE-A1-102006 011 729
- DE-A1-102007 029 719
- US-A1- 2005 017 587

## Beschreibung

Die Erfindung betrifft ein Blechpaket, insbesondere für den Rotor eines Elektromotors, gemäß dem Oberbegriff des Anspruchs 1. Ein derartiges Blechpaket ist beispielsweise aus der DE 10 2007 029 719 A1 bekannt.

Elektromotoren mit derartigen Blechpaketen sind als Kleinmotoren häufig im Kraftfahrzeugbereich und dort insbesondere als Lenkungsmotoren oder in Verstellantrieben eingesetzt. Während bei einem Elektromotor als so genannter Außenläufermotor der Rotor den feststehenden Stator konzentrisc h umgibt, ist bei einem Innenläufermotor der Stator unter Bildung eines Luftspaltes koaxial zum rotierenden Läufer (Rotor) angeordnet.

Trägt der Rotor eine Anzahl von Dauer- oder Permanentmagneten und umfasst der Stator eine beispielsweise dreiphasig verschaltete Spulenwicklung, die über pulsseitenmodulierte Ströme angesteuert wird, so ist ein permanent erregter bürstenloser Gleichstrommotor bereitgestellt. Ist dabei der Rotor mit den Magneten versehen, so können diese durch Klemmung und/oder Verklebung am Blechpaket des Rotors gehalten sein. Das Blechpaket besteht aus einer Vielzahl von stanzpaketierten Einzelblechen (Blechlaminate).

Aus der DE 100 09 151 C2 ist es bekannt, bei einem Synchronmotor stirnseitig am Rotor angebrachte Klemmelemente vorzusehen, die zunächst radial aus dem Blechpaket herausragen und nach Einsetzen der Magneten in eine axiale Ausrichtung umgebogen werden, um mit diesen axial abgebogenen Enden in Ausnehmungen der Magnete einzugreifen. Bei der Herstellung eines solchen Blechpaketes werden Blechlaminate mit und ohne solche Klemmelemente oder Vorsprünge hergestellt.

Aus der DE 10 2007 015 249 A1 ist es bekannt, ein Rotorpaket mit Taschen auszuführen, in die Magnete (Permanentmagnete) eingesetzt werden. Die Magnete werden dort mittels zusätzlichen, auf die einander gegenüberliegenden Stirnseiten des Rotorpaketes aufsetzbare Halteelemente fixiert. Hierzu greifen achsparallele Klemmelemente jeweils in eine Nut ein, die auf der der Rotorachse zugewandten Taschenlängsseite mittig in die jeweilige Tasche eingebracht ist.

Aus der DE 103 57 502 A1 ist ein Rotor bekannt, der sich in axialer Richtung aus einem Blechpaket aus identisch geformten Einzelblechen zusammensetzt, wobei in Aufnahmetaschen des Rotors eingesetzte Magnete mittels an den Schmalseiten der Aufnahmetaschen vorgesehenen Nasen gehalten sind.

Bei dem aus der DE 10 2007 029 719 A1 bekannten Blechpaket tragen Taschenöffnungen von Einzelblechen entweder an beiden Schmalseiten oder an nur einer, jedoch stets an der gleichen Schmalseite eine Klemmlasche.

Aus der US 5,581,140 ist ebenfalls ein aus Einzelblechen gestapelter Rotor mit Aufnahmetaschen für Magnete bekannt. An den Längsseiten der Aufnahmetaschen sind Klemmlaschen zur Klemmfixierung der Magnete vorgesehen, wobei die Klemmlaschen nicht in jeder Blechlage Klemmlaschen, sondern nur in jeder dritten oder vierten Blechlage vorgesehen sind.

Der Erfindung liegt die Aufgabe zugrunde, ein Blechpaket der eingangs genannten Art dahingehend zu verbessern, dass in einfacher Art und Weise eine zuverlässige Fixierung der Magnete sichergestellt ist.

Diese Aufgabe wird erfindungsgemäß gelöst durch die Merkmale des Anspruchs 1. Dazu ist ein Blechpaket, insbesondere für den Rotor eines Elektromotors mit umlaufend einer Mehrzahl von Taschen zur Aufnahme jeweils eines Magneten vorgesehen, wobei jedes einer Vielzahl von übereinander gestapelten Einzelbleche eine Anzahl von Taschenöffnungen mit angeformten Klemmlaschen zur Klemmfixierung der Magnete aufweist. Dabei weist jede Taschenöffnung eine einzelne Klemmlasche auf, wobei die einzelnen Klemmlaschen von in Umfangsrichtung des Einzelbleches benachbarten Taschenöffnungen an gegenüberliegenden Öffnungsseiten vorgesehen sind. Die gleichen Einzelbleche sind für eine wechselseitige Klemmung der Magnete zueinander um einen Winkel versetzt gestapelt.

Sind die Einzelbleche zum Blechpaket gestapelt, so werden beim Einsetzen der Magnete in die jeweiligen Taschen die Klemmlaschen plastisch verformt und damit der entsprechende Magnet zuverlässig klemmfixiert. Die hierzu vorgesehene wechselseitige Klemmung des jeweiligen Magneten in der entsprechenden Magnettasche wird erreicht, indem jedes Einzelblech nicht in jeder Taschenöffnungen an derselben Stelle eine derartige Klemmlasche aufweist. Vielmehr sind in Taschenlängsrichtung die Einzelbleche mit an der jeweiligen Öffnungsseite - und damit an der entsprechenden Taschenwandung - alternierend einer laschenbehafteten und einer laschenfreien Taschenöffnung übereinander gestapelt. Dabei ist an gegenüberliegenden Schmalseiten der Taschenöffnung die alternierende Abfolge der Klemmlaschen wechselseitig, wobei zwei benachbarte Einzelbleche an gegenüberliegenden Schmalseiten der Taschenöffnungen jeweils eine Klemmlasche tragen.

Besonders vorteilhaft ist hierdurch die Verwendung von gleichen Einzelblechen, d. h. von Einzelblechen mit gleichermaßen ausgeprägten Taschenöffnungen mit angeformten Klemmlaschen. Dabei trägt jede Taschenöffnung eine einzelne Klemmlasche, die alternierend an der einen Schmalseite oder an der anderen gegenüberliegenden Schmalseite der benachbarten Taschenöffnung vorgesehen ist.

Werden nun bei der Herstellung des Blechpaketes, d. h. beim Stapeln oder Stanzpaketieren die identischen Einzelbleche gegeneinander im Uhrzeiger- oder Gegenuhrzeigersinn abwechselnd verdreht, so ist unterhalb jeder Klemmlasche stets zumindest ein klemmlaschenfreier Öffnungsrand innerhalb der jeweiligen Taschenöffnung angeordnet. Somit kann sich jede einzelne Klemmlasche beim Einsetzen des Magneten in die entsprechende Tasche elastisch in Taschenlängsrichtung verformen, so dass eine zuverlässige form- und kraftschlüssige Klemmfixierung hergestellt ist. Dabei können Toleranzen sowohl hinsichtlich der äußeren Magnetabmessungen als auch der inneren Taschenabmessungen zuverlässig ausgeglichen werden.

Die mit der Erfindung erzielten Vorteile bestehen insbesondere darin, dass durch eine Klemmfixierung der Magnete mit an Taschenöffnungen von Einzelblechen eines Blechpaketes angeformten Klemmlaschen eine zuverlässige Klemmfixierung der in die Taschen eingesetzten Magnete gegeben ist. Durch die vorzugsweise tangentiale Ausrichtung der Klemmlaschen und deren wechselseitige Orientierung innerhalb der jeweiligen Tasche des Blechpaketes können identische Einzelbleche, beispielsweise in einem Stanzverfahren, hergestellt werden. Die dann vorzugsweise symmetrisch ausgebildeten Einzelbleche mit in Umfangsrichtung wiederkehrendem Stanzbild der einzelnen Taschenöffnungen können durch Verdrehen von Einzelblech zu Einzelblech innerhalb des Blechstapels um einen bestimmten Winkel das gewünschte Laschenbild entlang der Taschenlängsachse der einzelnen Taschen zur Aufnahme der Magnete bereitgestellt werden.

Bei innerhalb der einzelnen Taschenöffnungen alternierendem Stanzbild ist der Verdrehwinkel durch das Verhältnis von 360° zur Anzahl der Taschen bzw. Magnete bestimmt. Bei einem Blechpaket mit zehn Taschen zur Aufnahme von zehn Magneten ist somit der Verdrehwinkel bei alternierendem Stanzbild der Taschenöffnungen der Einzelbleche 36°. Ein mit einem solchen Blechpaket ausgerüsteter Rotor dient dann zur Bereitstellung eines beispielsweise 10-poligen Elektromotors.

Nachfolgend werden Ausführungsbeispiele anhand einer Zeichnung näher erläutert. Darin zeigen.
- Fig. 1: in einer teilweisen Schnittdarstellung einen von einem ausschnittsweise dargestellten Stator umgebenen Rotor mit einem Blechpaket mit zueinander verdrehten Einzelblechen mit alternierend klemmlaschenbehafteten und klemmlaschenfreien Taschenöffnungen,
- Fig. 2: einen Ausschnitt II aus Fig. 1 in größerem Maßstab mit in eine Tasche eingesetztem Magnet,
- Fig. 3: in einer perspektivischen Darstellung das Blechpaket mit in eine Tasche teilweise eingesetztem Magnet,
- Fig. 4: einen Ausschnitt IV aus Fig. 3 in größerem Maßstab mit einer wechselseitigen Anordnung von Klemmlaschen innerhalb einer Tasche übereinander gestapelter Einzelbleche, und
- Fig. 5: ein Einzelblech des Blechpaketes in einer Draufsicht mit in benachbarten Taschenöffnungen an gegenüberliegenden Schmalseiten angeformten Klemmlaschen.

Einander entsprechende Teile sind in allen Figuren mit den gleichen Bezugszeichen versehen.

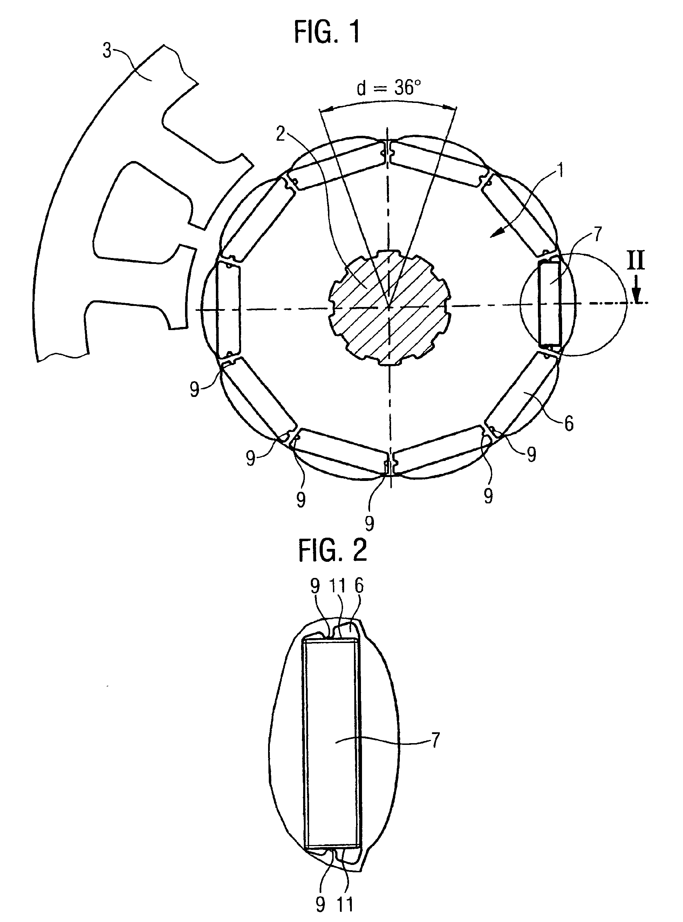

Fig. 1 zeigt in einer Draufsicht ein Blechpaket 1, das auf eine im Schnitt gezeigte Achse oder Ankerwelle eines Rotors 2 aufgesetzt und mit dieser beispielsweise nach Art eines Presssitzes zusammengefügt ist. Der Rotor 2 ist zur Bereitstellung eines Elektromotors von einem ausschnittsweise dargestellten gezahnten Stator 3 koaxial umgeben. Bei dem Motor handelte es sich vorzugsweise um einen permanent erregten bürstenlosen Gleichstrommotor zur Verwendung als Antrieb in einem Hilfsaggregat, beispielsweise in einem Lenkungssystem, oder in einem Verstellelement, beispielsweise in einem Fensterheber eines Kraftfahrzeugs.

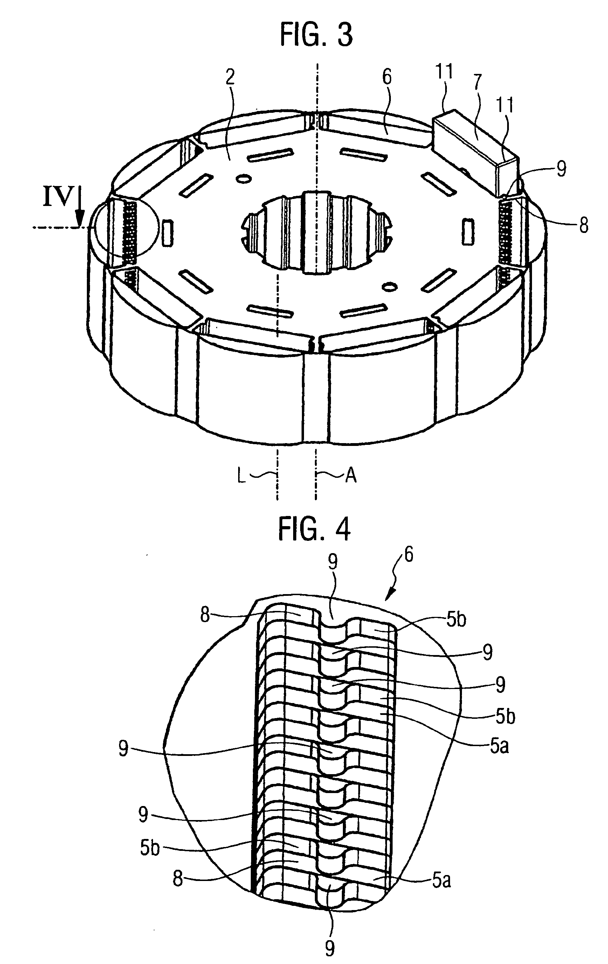

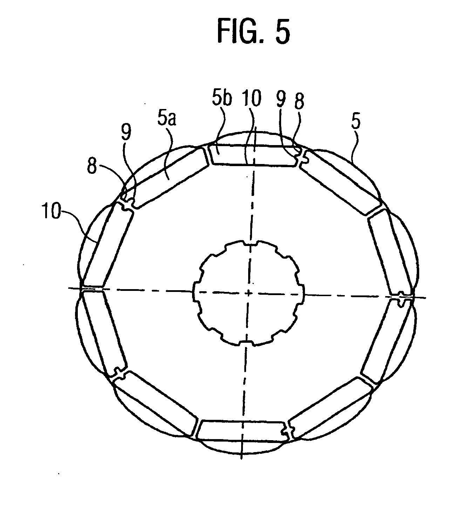

Das Blechpaket 1 ist vorzugsweise durch Stanzpaketieren aus in Axialrichtung 4 (Fig. 3) gestapelten Einzelblechen 5 aufgebaut, wie diese in zwei unterschiedlichen Ausführungsformen in den Fig. 5 und 6 dargestellt sind.

Innerhalb des Blechpakets 1 bilden die übereinander gestapelten Einzelbleche 5 Taschen 6 zur Aufnahme von Magneten (Permanentmagnete) 7 aus. Dazu weist jedes Einzelblech 5 eine der Anzahl der Taschen - und damit eine der Anzahl der Magnete 7 - entsprechende Anzahl von Taschenöffnungen 5a, 5b auf. Diese Taschenöffnungen 5a, 5b weisen an ihren Schmalseiten 8 tangential nach innen gerichtete Klemmlaschen 9 auf. Die Klemmlaschen 9 werden beim Stanzen der Einzelbleche hergestellt und sind demnach an den Öffnungsrand 10 der jeweiligen Taschenöffnung 5a, 5b angeformt. Die mit der Blechoberfläche des Einzelbleches 5 fluchtenden Klemmlaschen 9 sind innerhalb der jeweiligen Taschenöffnung 5a, 5b tangential ausgerichtet.

Innerhalb des Blechpaketes sind die ansonsten gleichartigen Einzelbleche 5 gegeneinander verdreht derart, dass innerhalb einer Tasche 6 vermieden ist, dass zwei Klemmlaschen 9 unmittelbar übereinander zur Anlage gelangen.

Eine entsprechende Anordnung der Klemmlaschen 9 innerhalb einer Tasche 6 ist in Fig. 4 gezeigt. Dieses Laschenmuster innerhalb der Taschen 6 wird mit Einzelblechen 5 gemäß der Ausführungsform nach Fig. 5 erreicht. So weist dort jede Taschenöffnung 5a und 5b des Einzelbleches 5 jeweils eine Klemmlasche 9 auf. Diese Klemmlaschen 9 sind in Umfangsrichtung von Taschenöffnung 5a zu Taschenöffnung 5b an gegenüberliegenden Schmalseiten 8 vorgesehen.

Durch Verdrehen zweier übereinander angeordneter Einzelbleche 5 im Uhrzeiger- oder Gegenuhrzeigersinn um den Verdrehwinkel d wird das gewünschte alternierende Klemmlaschenmuster mit einer Anzahl von Klemmlaschen 9 in der jeweiligen Tasche 6 erzielt. Dabei ist jede einzelne Klemmlasche 9 zumindest in einer Längsrichtung L, d.h. gemäß der Darstellung nach Fig. 3 nach oben und/oder nach unten elastisch verformbar.

In Fig. 2 ist vergleichsweise deutlich die Klemmfixierung des jeweiligen Magneten 7 innerhalb einer solchen Tasche 6 erkennbar dargestellt. Ersichtlich liegt der Magnet 7 mit dessen Schmalseiten 11 an gegenüber liegenden Klemmlaschen 9 an und ist dabei innerhalb der Tasche 6 klemmfixiert Hierzu werden die Klemmlaschen 9 beim Einsetzen des Magneten 7 (Fig. 3) zumindest geringfügig verformt.

Infolge der Klemmfixierung mittels der Klemmlaschen 9 innerhalb der allseitig geschlossenen Taschen 6 des Blechpaketes 1 sind die Magnete 7 einerseits zuverlässig gehalten. Andererseits entstehen aufgrund der Klemmfixierung auch bei hohen Rotordrehzahlen praktisch keine spielbedingten Geräuschentwicklungen. Darüber hinaus können mittels der verformbaren Klemmlaschen 9 relativ große Toleranzen sowohl bei den Außenabmessungen der Magnete 7 als auch bei den Innenabmessungen der Taschen 6 bzw. Taschenöffnungen 5a, 5b ausgeglichen werden.

Des Weiteren ist aufgrund der Dimensionierung und Anordnung der Klemmlaschen 9 innerhalb der Taschen 6 ein leichtes Nachgeben der Gesamtgeometrie beim Einbringen des jeweiligen Magneten 7 in die entsprechende Magnettasche 6 ermöglicht. Dabei ist auch die Spielfreiheit bei gleichzeitig hoher Klemmkraft des Magneten 7 gewährleistet.

Ferner sind zur Herstellung des Blechpaketes 1 nur gleiche oder identische Einzelbleche 5 vorzuhalten, die zur Erzielung einerseits der gewünschten Klemmkraft und andererseits der dadurch bedingten Spielfreiheit der Magnete 7 lediglich um einen bestimmten Drehwinkel d während der Stapelung der Einzelbleche 5 verdreht oder verschoben werden müssen.

Aufgrund der zuverlässigen Klemmfixierung ist ein zusätzliches Verkleben der Magnete 7 innerhalb der Taschen 6 nicht notwendig. Somit sind bei gleichzeitig hoher Teilegleichheit praktisch keine zusätzlichen Prozessschritte oder Materialien erforderlich.

### Bezugszeichenliste

- 1: Blechpaket
- 2: Ankerwelle/Rotorachse
- 3: Stator/Zahn
- 4: Axialrichtung
- 5: Einzelblech
- 5a,5b: Taschenöffnungen
- 6: Tasche
- 7: Magnet
- 8: Öffnungs-/Schmalseite
- 9: Klemmlasche
- 10: Öffnungsrand
- 11: Magnet-Schmalseite

- A: Axialrichtung
- L: Taschenlängsrichtung

## Patentansprüche

1. Blechpaket (1), insbesondere für den Rotor (2) eines Elektromotors, wobei am Blechpaket umlaufend eine Mehrzahl von Taschen (6) zur Aufnahme jeweils eines Magneten (7) ausgebildet sind, wobei jedes einer Vielzahl von übereinander gestapelten Einzelbleche (5) eine Anzahl von Taschenöffnungen (5a,5b) mit angeformten Klemmlaschen (9) zur Klemmfixierung der Magnete (7) aufweist, und wobei gleiche Einzelbleche (5) für eine wechselseitige Klemmung der Magnete (7) zueinander um einen Winkel (d) versetzt gestapelt sind, wobei jede Taschenöffnung (5a, 5b) eine einzelne Klemmlasche (9) aufweist,
**dadurch gekennzeichnet, dass** die Klemmlaschen (9) von in Umfangsrichtung des Einzelbleches (5) benachbarten Taschenöffnungen (5a, 5b) an gegenüberliegenden Öffnungsseiten (8) vorgesehen sind.

2. Blechpaket (1) nach Anspruch 1,
**dadurch gekennzeichnet,**
**dass** der Versatzwinkel (d) dem durch die Anzahl der Taschen (6) bestimmten Bruchteil von 360° entspricht.

3. Blechpaket (1) nach Anspruch 1 oder 2,
**dadurch gekennzeichnet,**
**dass** die Klemmlaschen (9) an radialen Schmalseiten (8) der jeweiligen Taschenöffnung (5a, 5b) an das Einzelblech (5) angformt sind.

4. Blechpaket (1) nach einem der Ansprüche 1 bis 3,
**dadurch gekennzeichnet,**
**dass** die Klemmlaschen (9) vom Öffnungsrand (10) der jeweiligen Taschenöffnungen (5a, 5b) tangential nach innen weisen.

5. Blechpaket (1) nach einem der Ansprüche 1 bis 4,
**dadurch gekennzeichnet,**
**dass** die Taschenöffnungen (5a, 5b) der Einzelbleche (5) an die Querschnittsfläche der Magnete (7) derart angepasst sind, dass in den Taschen (6) der gestapelten Einzelbleche (5) eingesetzte Magnete (7) infolge elastischer Verformung der Klemmlaschen (9) form- und kraftschlüssig gehalten sind.

6. Elektromotor (2, 3) mit einem Blechpaket (1) nach einem der Ansprüche 1 bis 5.

## Claims

1. Lamination stack (1), in particular for the rotor (2) of an electric motor, wherein a plurality of pockets (6) for receiving respectively one magnet (7) is embodied circumferentially on the lamination stack, wherein each of a plurality of individual laminations (5) which are stacked on top of each other comprises a number of pocket openings (5a, 5b) with clamping plates (9) formed thereon for fixing the magnets (7) in a clamping manner, and wherein identical individual laminations (5) are stacked in an offset manner by an angle (d) in relation to each other for clamping the magnets (7) in an alternating manner, wherein each pocket opening (5a, 5b) comprises an individual clamping plate (9)
**characterized in that**
the clamping plates (9) are provided on opposite opening sides (8) of pocket openings (5a, 5b) which are adjacent to each other in circumferential direction of each individual lamination (5).

2. Lamination stack (1) according to claim 1,
**characterized in that**
the offset angle (d) corresponds to the fraction of 360° defined by the number of pockets (6).

3. Lamination stack (1) according to claim 1 or 2,
**characterized in that**
the clamping plates (9) are formed on the individual lamination (5) on radially aligned narrow sides (8) of the respective pocket opening (5a, 5b).

4. Lamination stack (1) according to one of the claims 1 to 3,
**characterized in that**
the clamping plates (9) are tangentially directed to the inside from the edge of the opening (10) of the respective pocket openings (5a, 5b).

5. Lamination stack (1) according to one of the claims 1 to 4,
**characterized in that**
the pocket openings (5a, 5b) of the individual laminations (5) are adapted to the cross-sectional area of the magnets (7) such that magnets (7) inserted in the pockets (6) of the stacked individual laminations (5) are held in a form-locking and force-locking manner as a result of an elastic deformation of the clamping plates (9).

6. Electric motor (2, 3) with a lamination stack (1) according to one of the claims 1 to 5.

## Revendications

1. Paquet de tôles (1), en particulier pour le rotor (2) d'un moteur électrique, où une pluralité de poches (6) pour recevoir respectivement un aimant (7) est réalisée de manière circonférentielle sur le paquet de tôles, où chacune d'une pluralité de tôles individuelles (5), étant empilées l'une sur l'autre, comprend un nombre d'ouvertures de poche (5a, 5b) avec des plaques de serrage (9) formées dessus pour fixer les aimants (7) de manière serrée, et où des tôles individuelles identiques (5) sont empilées de manière décalée par un angle (d) l'une par rapport à l'autre pour serrer les aimants (7) de manière alternée, où chaque ouverture de poche (5a, 5b) comprend une plaque de serrage individuelle (9)
**caractérisé en ce que**
les plaques de serrage (9) sont prévues sur des côtés d'ouverture opposés (8) des ouvertures de poche (5a, 5b) qui sont adjacentes l'une à l'autre dans la direction circonférentielle de chaque tôle individuelle (5).

2. Paquet de tôles (1) selon la revendication 1,
**caractérisé en ce que**
l'angle de décalage (d) correspond à la fraction de 360° definée par le nombre de poches (6).

3. Paquet de tôles (1) selon la revendication 1 ou 2,
**caractérisé en ce que**
les plaques de serrage (9) sont formées sur la tôle individuelle (5) sur des côtés étroits alignés radialement (8) de l'ouverture de poche (5a, 5b) respective.

4. Paquet de tôles (1) selon l'une des revendications 1 à 3,
**caractérisé en ce que**
les plaques de serrage (9) sont dirigées de manière tangentielle du bord de l'ouverture (10) de l'ouverture de poche respective (5a, 5b) vers l'intérieur.

5. Paquet de tôles (1) selon l'une des revendications 1 à 4,
**caractérisé en ce que**
les ouvertures de poche (5a, 5b) des tôles individuelles (5) sont adaptées à la surface transversale des aimants (7) de telle manière que des aimants (7) insérés dans les poches (6) des tôles individuelles empilées (5) sont tenus à complémentarité de force et de forme à la suite d'une déformation élastique des plaques de serrage (9).

6. Moteur électrique (2, 3) avec un paquet de tôles (1) selon l'une des revendications 1 à 5.
